# EUROPEAN PATENT SPECIFICATION

(11) **EP 0 811 082 B1**
(45) Date of publication and mention of the grant of the patent: **09.05.2001**
(21) Application number: 96904685.3
(22) Date of filing: 15.02.1996
(51) Int. Cl.: C23C 16/26, A61C 1/00, A61C 3/00

(54) **CVD DIAMOND BURRS FOR ODONTOLOGICAL AND RELATED USES**
CVD DIAMANDMEISSEL FÜR ZAHNÄRZTLICHEN ODER ÄHNLICHEN GEBRAUCH
MOLETTES A DIAMANT OBTENUES PAR DEPOT CHIMIQUE EN PHASE VAPEUR ET DESTINEES A UN USAGE ODONTOLOGIQUE OU ANALOGUE

(30) Priority: 21.02.1995 BR 9500865
(43) Date of publication of application: 10.12.1997
(73) Proprietor: Instituto Nacional De Pesquisas Espaciais, 12227-010-Sao José dos Campos, SP (BR)
(72) Inventor: TRAVA AIROLDI, Vladimir, Jesus, 12227-010-Sao José dos Campos, SP (BR); CORAT, Evaldo, José, 12227-010-Sao José dos Campos, SP (BR); FERREIRA LEITE, Nélia, 12227-010-Sao José dos Campos, SP (BR); DEL BOSCO, Edson, 12227-010-Sao José dos Campos, SP (BR); BARANAUSKAS, Vitor, 13801-000-Campinas, SP (BR); CARNEIRO VALERA, M., Faculdade de Odontologia, 12227-010-Sao José dos Campos, SP (BR); VILCHE PENA, Angel, Fidel, 19100-000-Presidente Prudente, SP (BR)
(74) Representative: Hagemann, Heinrich, Dr.rer.nat., Dipl.-Chem.
(86) International application number: BR9600008
(87) International publication number: WO9626303

(56) References cited:
- EP-A- 0 378 230
- EP-A- 0 467 114
- EP-A- 0 509 875
- GB-A- 2 269 105
- DATABASE WPIL ON QUESTEL, LONDON: DERWENT PUBLICATIONS LTD., AN 92-192470[23]; & ZA,A,91 05844 ((DLAN/) DE LANGE PW), ((GROT/) GROTEPASS WP).

## Description

This invention is related to the technology of Chemical Vapor Deposition (CVD) diamond growth. This is a subject of intense interest, not only due to basic research, but mainly to the many possible technological applications.
Some of its superior properties make diamond the material of choice for many applications. Some CVD growth techniques have been developed at Instituto Nacional de Pesquisas Espaciais (INPE) and the present invention is a result of this development.

The EP-A-0 378 230 discloses a method and apparatus for forming diamond thin films using plasma activated gases including microwaves for producing a micro drill used for perforating printed substrates. The document also states that said diamond film may not only be used for cutting tools, grinding tools or dentist's tools but also for hard coating various parts such as abrasion resistant machinery parts.

This document therefore is directed to coatings only and not to freestanding diamond films.

Another coating technique is known from the document "Database WPI, Derwent Publications Ltd., London, GB, AN 92 - 192 470 & ZA - A - 9 105 844." This document mentions explicitly surgical drills, coated with titanium nitride.

The object of this patent is fundamented in the growth of thin and free standing CVD diamond films. These diamond films are brazed on pins of stainless steel or any other material, to be used as burrs, mills and files in odontological and related work. It is, also, object of this patent the obtainment of burrs, mills and files from the deposition of CVD diamond on any kind of material with diamond powder impregnated by any process. For example, CVD diamond may be deposited on conventional odontological burrs, obtained from electrodeposited and/or brazed diamond.

These objects are met by diamond burrs produced by the process as described by claim 1. Improvements of the process are recited in additional claims depending thereof.

The diamond films may be obtained by the Hot Filament Chemical Vapor Deposition (HFCVD) or any other CVD technique. The HFCVD technique is particurlaly suitable due to its simplicity and low cost. Therefore we describe the obtainment of thin and free standing films based on the HFCVD technique. To use other growth techniques it is necessary to adapt the growth conditions to the appropriate activation method.

The procedure of the invention to obtain burr from freestanding diamond films with poor adherence with the final burr stick is as follows:
a) preparation of substrate pins of a material suitable for diamond growth, molybdenum for example. The diameter and the length of such pins depend on the growth parameters and growth method. The upper end must be prepared to have the final form of the burr tip;
b) deposition of the diamond film on the upper end of the substrate pins prepared in the previous item. The growth conditions in the reactor for the deposition of the freestanding diamond tip must be adjusted in order to obtain the largest grain size. The boring and abrading capabilities depend on the grain size of the burr tip.
c) Dissolution of the substrate pins in acid solution to release a freestanding diamond tip;
d) Laser trimming of the diamond tip, or any other trimming method, to eliminate its fragile end;
e) Brazing or welding of the diamond tip on the final burr stick, made of stainless steel or any other suitable material, to obtain the final burr form. The excess of brazing alloy is removed to free the diamond cutting surface.

The deposition of thin or thick diamond films can be provided on sticks of any material prepared by the deposition of diamond powder by any process. The diamond particles of the diamond powder may size from submicrometric to milimetric range and are used to enhance nucleation and adherence of the diamond film on the stick material.

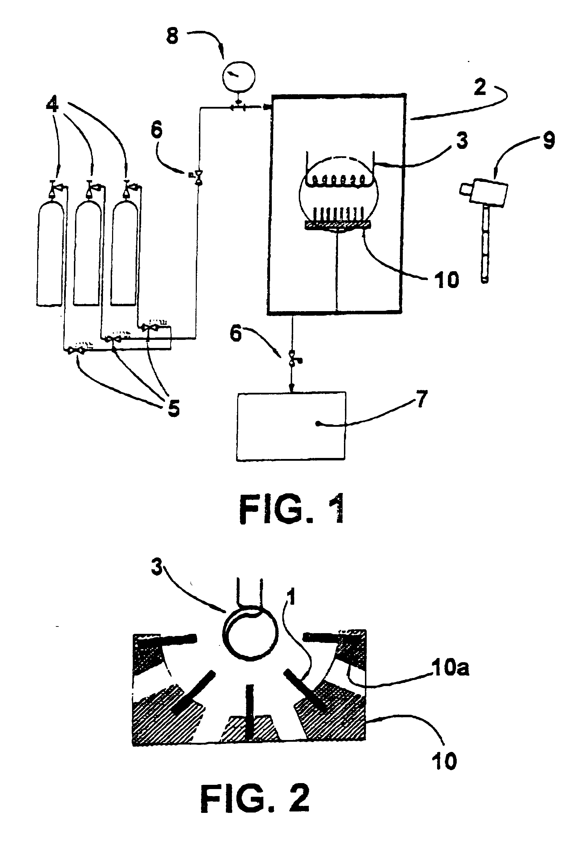

Figure 1 shows a schematic diagram for a HFCVD diamond growth reactor. The method consists in flowing a gas mixture appropriate for diamond growth, for example a mixture of methane highly diluted (0.1 - 4%) in hydrogen, through the reactor 2. The hot filament 3 is located at the proper distance from the substrates 1. Each gas component of the mixture may be stored and controlled independently with flow controllers 5. A premixed gas mixture may also be used. The reactor internal pressure may be conveniently controlled with needle valves 6, a vacuum pump 7, and an absolute pressure meter 8. The filament and substrate temperatures are monitored by an optical pyrometer 9 and a thermocouple, respectively. The film thickness may be controlled by the growth time.

With such reactor is possible to grow diamond on various substrate forms depending on the desired application. For the case of odontological burrs the substrate may be small pins of which the upper ends are prepared to obtain the desired burr tip form. If the burr stick is not suitable for diamond growth, it is necessary to grow a freestanding film on an appropriate substrate, dissolve the substrate, trim the fragile end of the diamond tip, and braze it on the burr stick.

The HFCVD system is very convenient for scale production of such CVD diamond tips. An adequate substrates' holders 10 may maximize the production efficiency of a single reactor 2.

Figure 2 shows an example of an appropriate substrate holder 10 positioned relative to the filament 3. A spiral filament 3 and the substrate holder 10 are placed in an adequate position to keep the same distance from the various pin substrates 1. The number of pin substrates per reactor 2 may be in the order of several tens for filaments only a few centimeters long. The substrate holder may have through holes 10a conveniently distributed to allow gas flow in the reactive region.

## Claims

1. Process for producing diamond burrs, particularly for odontological purposes and related uses characterized by the steps of
a) preparation of substrate pins (1) of a material suitable for diamond growth;
b) preparation of the upper end of the substrate pins (1) to the final form of a burr tip;
c) deposition of the diamond film on the upper end of the substrate pins (1) in a reactor (2) the growth conditions for the deposition of the freestanding diamond tip being adjusted in order to obtain the largest grain size;
d) dissolution of the substrate pins (1) in acid solution to release a freestanding diamond tip;
e) trimming of the diamond tip, in particular by laser trimming to eliminate its fragile end;
f) brazing or welding of the diamond tip on the final burr stick to obtain the final burr form.

2. Process according to claim 1, characterized in that the gas mixture contains methane diluted in hydrogen.

3. Process according to claim 2, characterized in that 0.1 to 4% methane are diluted in hydrogen.

4. Process according to one of the claims 1 to 3, characterized by controlling the diamond film thickness by the growth time.

5. Process according to one of the claims 1 to 4, characterized by providing a filament (3) in the reactor (2) and positioning the free end of the substrate pins (1) at an adequate distance of the filament (3).

6. Process according to claim 5, characterized by using a substrate holder (10) holding several substrate pins (1) and keeping the same distance between various substrate pin (1) ends and the filament (3).

7. Process according to claim 5, characterized by providing through holes (10a) in the substrate holder (10) to allow gas flow into the reactive region.

## Patentansprüche

1. Verfahren zum Herstellen von Diamantbohrern, insbesondere für zahnärztlichen oder ähnlichen Gebrauch, gekennzeichnet durch folgende Verfahrensschritte:
a) Bereitstellen von Substratstiften (1) aus einem für Diamantwachstum geeigneten Material;
b) Bereitstellen des oberen Endes der Substratstifte (1) in der Endform einer Bohrerspitze;
c) Ablagern des Diamantfilms auf dem oberen Ende der Substratstifte (1) in einem Reaktor (2), wobei die Wachstumsbedingungen für die Ablagerung der freistehenden Diamantspitze so eingestellt werden, daß die größtmögliche Korngröße erhalten wird;
d) Auflösen der Substratstifte (1) in saurer Lösung, um eine freistehende Diamantspitze freizusetzen;
e) Trimmen der Diamantspitze, insbesondere durch Lasertrimmen, um ihr zerbrechliches Ende zu entfernen;
f) Hartlöten oder Schweißen der Diamantspitze auf den endgültigen Bohrstab, um die endgültige Bohrerform zu erhalten.

2. Verfahren nach Anspruch 1, dadurch gekennzeichnet, daß die Gasmischung mit Wasserstoff verdünntes Methan enthält.

3. Verfahren nach Anspruch 2, dadurch gekennzeichnet, daß 0,1 bis 4% Methan mit Wasserstoff verdünnt werden.

4. Verfahren nach einem der Ansprüche 1 bis 3, dadurch gekennzeichnet, daß die Diamantfilmdicke durch die Wachstumszeit gesteuert wird.

5. Verfahren nach einem der Ansprüche 1 bis 4, dadurch gekennzeichnet, daß im Reaktor (2) ein Filament (3) bereitgestellt wird und die freien Enden der Substratstifte (1) in einem angemessenen Abstand von Filament (3) positioniert werden.

6. Verfahren nach Anspruch 5, dadurch gekennzeichnet, daß ein Substrathalter (10) verwendet wird, der mehrere Substratstifte (1) hält und den gleichen Abstand zwischen verschiedenen Enden der Substratstifte (1) und dem Filament (3) aufrechterhält.

7. Verfahren nach Anspruch 5, dadurch gekennzeichnet, daß im Substrathalter (10) Durchgangslöcher (10a) ausgebildet werden, um einen Gasstrom in den Reaktionsbereich zu ermöglichen.

## Revendications

1. Procédé de production de fraises en diamant, en particulier à des fins odontologiques et pour des utilisations associées, caractérisé par les étapes dans lesquelles
a) on prépare des broches (1) de substrat en une matière convenant à la croissance du diamant ;
b) on prépare l'extrémité supérieure des broches (1) de substrat dans la forme finale d'une pointe en diamant ;
c) on dépose le film de diamant sur l'extrémité supérieure des broches (1) de substrat dans un réacteur (2), les conditions de croissance pour le dépôt de la pointe isolée en diamant étant ajustées pour obtenir la dimension de grain la plus grande ;
d) on dissout les broches (1) de substrat dans une solution acide pour libérer une pointe en diamant isolée ;
e) on dresse, en particulier par dressage au laser, la pointe en diamant pour éliminer son extrémité fragile ;
f) on brase ou on soude la pointe en diamant sur le manche de fraise finie pour obtenir la forme de fraise finale.

2. Procédé selon la revendication 1, caractérisé en ce que le mélange gazeux contient du méthane dilué dans de l'hydrogène.

3. Procédé selon la revendication 2, caractérisé en ce que 0,1 à 4 % de méthane sont dilués dans de l'hydrogène.

4. Procédé selon l'une des revendications 1 à 3, caractérisé en ce qu'on règle l'épaisseur du film de diamant à l'aide du temps de croissance.

5. Procédé selon l'une des revendications 1 à 4, caractérisé en ce qu'on place un filament (3) dans le réacteur (2) et on positionne l'extrémité libre des broches
(1) de substrat à une distance appropriée du filament (3).

6. Procédé selon la revendication 5, caractérisé en ce qu'on utilise un support (10) de substrat portant plusieurs broches (1) de substrat et on maintient la même distance entre les extrémités des diverses broches (1) de substrat et le filament (3).

7. Procédé selon la revendication 5, caractérisé en ce qu'on réalise des trous traversants (10a) dans le support (10) de substrat pour permettre un écoulement de gaz jusque dans la région active.
